# EUROPEAN PATENT APPLICATION

(11) **EP 1 992 407 A1**
(43) Date of publication of application: **19.11.2008**
(21) Application number: 07388032.0
(22) Date of filing: 09.05.2007
(51) Int. Cl.: B01J 19/00

(54) **Method and apparatus for oligo peptide synthesis**

(71) Applicant: Alcorlab A/S, 3500 Værløse (DK)
(72) Inventor: The designation of the inventor has not yet been filed
(74) Representative: Nielsen, Henrik Sten

(57) **Abstract**

An oligopeptide synthesis device comprising a frame defining a centre line and a horizontal base plane orthogonal to the centre line. The device comprises an apparatus part stationary in relation to the frame and a movable part movable vertically relatively to the stationary apparatus part along the centre line. The stationary part supports a first number of synthesis material lines for connection to a respective supply container of a second number of supply containers containing synthesis materials and support a third number of solenoid valves for the controlling of the discharge. The movable part comprises a reaction holder comprising a fourth number of receptors for receiving the vessels. The receptors are located on a first circle having its centre on the centre line. The movable part comprises a revolveable holder disengageably coupled for connecting the revolveable holder to the reaction holder. It further comprises and supports a motor drive box which sealingly contains a drive motor for revolving the holder. The movable part comprises a first super and sub atmospheric pressure resistant sealing means for the sealing of the reaction holder relative to the stationary part and a second super and sub atmospheric pressure resistant sealing means for the sealing of the reaction holder relative to the revolveable holder. The first and second super and sub atmospheric pressure resistant sealing means establish, when said moveable part is in the first position, a sealed and air tight chamber between the stationary and moveable parts and contain the reaction holder and the revolveable holder. The first and second super and sub-atmospheric pressure resistant sealing means allow, when the moveable apparatus part is in the first position, the reaction holder to be revolved by the revolveable holder within the sealed and air tight chamber. Finally, the first and second super and sub atmospheric pressure and air tight chamber by disengaging the coupling.

## Description

This invention relates to an oligo peptide synthesis apparatus.

The invention further relates to two methods of performing an oligo peptide synthesis by means of the oligo peptide synthesis apparatus.

When a synthesis is performed a chemical compound is build up by synthesis materials containing suitable ingredients. Often the synthesis comprises a large number of synthesis materials, which are added together in a predetermined planned sequence.

In the drug industry time to market, development and test costs are competitive parameters. For instance, in order to synthesise DNA it is required to perform excessive synthesis and subsequent tests with the resulting products of the synthesis. A DNA undergoes the following steps: detritylation, activation, coupling, capping and oxidation. A more detailed explanation can be found in US 5,656,741, which hereby is incorporated by reference. Moreover, Jesper Wengels "Synthesis of 3'-C and 4' - C-branched oligodeoxnucleotides and the development of locked nucleic acid", accounts of chemical research, 1999, page 32 and pages 301-310 discusses DNA synthesis. Further explanation can be found in 10-nmol Oligonucleotide Synthesis for the ABI Model 394 DNA Synthesizer, Douglas A. Bintzler and Catherine E. Terrell, Journal of biomolecular techniques, Volume II, issue 3, September 2000.

In order to select a DNA chain, an excessive number of comparable and dissimilar DNA chains are typically built up. Such synthesis typically requires a lot of manual handling where DNA building blocks - so called nucleosides - A, T, C and G are combined into chains of varying length.

Such synthesis is typically performed in an apparatus in which wells or columns are located on a reaction holder, e.g. a plate with corresponding receptors. Each well or column is in the first place provided with a first nucleoside. Subsequently, synthesis material, i.e. a solution of the four DNA building blocks, i.e. dA amidit, dC amidit, dG amidit and T amidit along with other synthesis materials, being typically five helping reagents: tetrazol solution, Cap A and Cap B solutions, ion solution and trichloro-acetic acid solution as well as acetonitrile as a rinsing agent, are supplied in proper amounts to the first nucleoside. Alternatively, equivalence of the helping reagents and/or of the DNA building blocks is/are applied.

The oligo peptide synthesis apparatus may, without any mechanical modifications, make e.g. the synthesis combinations:
DNA - Phosphite Triester Approach
DNA - Phosphotriester Approach
LNA- Locked Nucleic Acids
mixed DNA/LNA oligonucleotide
RNA - RiboNucleicAcid
siRNA - Small interfering RNA
miRNA - Micro RNA
DNA/RNA Hybrids
LNA/RNA Hybrids
Polypeptids - Polymerized Amino Acids
PNA - Peptide nucleic acids
HMOs - Human Milk Oligosaccharides, or any combination of the mentioned synthesis combinations.

It is further contemplated that the apparatus is suitable for future synthesis combinations.

Laboratory staff will use as little as possible of the synthesis material and optimise during the synthesis planning to use a limited amount of synthesis material and accordingly an optimal number and optimal type of wells, vessels and columns. This accordingly calls for varying sized and a varying numbers of wells, vessels or columns located on the reaction holder and for an apparatus which securely can provide the synthesis materials to the reaction holder. A requirement is then, in order to save cost and time, that the reaction holder easily can be switched to change the numbers of wells, vessels and/or columns to be located on the reaction holder. A further requirement is that the reaction holder can be utilised with different numbers, types, shaped and sized wells, vessels and columns.

An apparatus is known in the art which apparatus uses X-Y positioning when synthesis material from a pipette or from a number of pipettes is to be delivered to a corresponding number of vessels. Such apparatus is relative large and is complicated to manufacture since robotic technology (arm, accurate positioning of the arm, control circuitry, etc) is involved. Moreover, since movements are performed in right-angled X-Y directions, the travelling along these movements take up time and over time, due to wear of parts (e.g. robotic arms) involved in the linear movements, movements tend to be less accurate, which in the worst results in that the synthesis materials are not properly delivered to the vessels from corresponding pipettes.

Accordingly, there is a need for an apparatus, which is simple to manufacture, with speedy movements of the pipettes to the vessels and with a high positioning accuracy of the movement and with reliable movements.

Further, there is a need for an apparatus which speeds up the provision of synthesis material to and through the filters of the vessels and which apparatus is capable of forcing the synthesis material through the filters, i.e. either down through the filter or in an upward movement through the filter.

Moreover, there is a need for a compact and relative small apparatus.

It is an object of the present invention to provide a reaction holder and an apparatus in which the holder can be applied, which reaction holder easily can be switched.

In order to speed up the process of switching the reaction holder, it is an object that this can be done fast and without the use of handtools.

It is an object of the present invention to provide the apparatus and the holder such that the reaction holder can be provided with varying shapes, sizes and numbers of vessels, wells and/or columns.

It is an object of the present invention to provide the apparatus and the reaction holder which each is simple to manufacture and which provide speedy movements of supply to vessels and with a high positioning accuracy of the movements.

It is an object of the present invention to provide a compact and relative small apparatus.

It is another object of the present invention to provide the holder for vessels with an optimal use of the holder's space, thus it is an object to provide the vessels and receptors for the vessels in an optimal space consuming configuration.

It is an object of the present invention to provide an apparatus, where the risk of explosion, e.g. from possibly exploding gases within the apparatus, is minimised.

It is a further object of the present invention to provide an apparatus, which internal processing of the apparatus is not influenced by the atmospheric air by any means, i.e. so that the apparatus does not allow the surrounding atmospheric air to entrain, where by any synthesises performed by means of the apparatus are unaffected by e.g. humid of poisoned surrounding atmospheric air. Accordingly, it is an object of the present invention to provide an apparatus, which is airtight both during synthesis and when the reaction holder, in which vessels are located, are revolved stepwise.

Often a small amount of synthesis material is even after the synthesis is completed still present in the tubes and internal connection lines of the apparatus. It is therefore an object to minimise the amount of synthesis material present in the tubes and internal connection lines of the apparatus to avoid vaste and ease the cleaning or washing out of the tubes and internal connection lines of the apparatus.

Accordingly, it is an object of the present invention to provide methods having the objects of the apparatus and the reaction holder.

The above object, the above advantage, and the above feature together with numerous other objects, advantages and features, which will be evident from the below detailed description of the present invention, are in accordance with the teaching of the present invention obtained by an oligo peptide synthesis apparatus comprising a frame defining a centre line and a horizontal base plane orthogonal to the centre line,
the apparatus comprising a stationary apparatus part being stationary in relation to the frame and a movable apparatus part, the movable apparatus part being movable vertically relatively to the stationary apparatus part along the centre line between a first and a second position,
the stationary apparatus part supporting a first number of material synthesis lines for connection to a respective supply container of a second number of supply containers containing synthesis materials and supporting a third number of solenoid valves for controlling the discharge of the synthesis materials,
the movable apparatus part comprising an oligo peptide synthesis reaction holder comprising a fourth number of receptors for receiving a corresponding number of vessels, the receptors being located on a first circle having its centre on the centre line,
the movable apparatus part comprising a revolveable holder having a disengageable coupling for connecting the revolveable holder to the oligo peptide synthesis reaction holder,
the movable apparatus part further comprising and supporting a motor drive box sealingly containing a drive motor for revolving the revolveable holder,
the movable apparatus part comprising a first super and sub atmospheric pressure resistant sealing means for sealing the oligo peptide synthesis reaction holder relative to the stationary apparatus part and a second super and sub atmospheric pressure resistant sealing means for sealing the oligo peptide synthesis reaction holder relative to the revolveable holder,
the first and second super and sub atmospheric pressure resistant sealing means establishing when the moveable apparatus part is in the first position a sealed and air tight chamber between the stationary and moveable apparatus parts and containing the oligo peptide synthesis reaction holder, and the revolveable holder,
the first and second super and sub atmospheric pressure resistant sealing means allowing when the moveable apparatus part is in the first position the oligo peptide synthesis reaction holder to be revolved by the revolveable holder within the sealed and air tight chamber, and
the first and second super and sub atmospheric pressure resistant sealing means allowing when the moveable apparatus part is in the second position the oligo peptide synthesis reaction holder to be removed from the sealed and air tight chamber by disengaging the coupling.

In an aspect of the oligo peptide synthesis apparatus, each of the synthesis material lines defining a discharge end, the discharge ends being positioned on a second circle having its centre on the centre line for allowing a specific discharge end to be positioned above a specific vessel of the oligo peptide synthesis reaction holder, when the revolveable holder is connected to the oligo peptide synthesis reaction holder.

In an aspect of the oligo peptide synthesis apparatus, the revolveable holder being journalled horizontally relative to the frame for stepwise revolving around the centre line relative to the frame, the revolveable holder being powered by the drive motor and being driven by a toothed belt connected to the drive motor through means of a pair of toothed pulleys.

In a preferred aspect of the oligo peptide synthesis apparatus, the coupling comprising a number of carriers provided on the revolveable holder and the carriers being for engagement in a number of carrier holes provided in the oligo peptide reaction holder.

In an alternative aspect of the oligo peptide synthesis apparatus the coupling comprising a number of carriers provided on the oligo peptide reaction holder, and the carriers for engagement in a number of carrier holes provided in the revolveable holder.

In an aspect of the oligo peptide synthesis apparatus, the stationary apparatus part most preferably being made of a POM material, preferably of PP, PE, PEEK, aluminium, glass or stainless steel materials.

In an aspect of the oligo peptide synthesis apparatus, the revolveable holder (409) and the oligo peptide reaction holder (30, 310a, 310b, 310c, 310d) each most preferably being made of a POM material, preferably of PP, PE, glassfilled PE, PEEK, PTFE, aluminium or stainless steel materials.

In an aspect of the oligo peptide synthesis apparatus, the number of receptors is 10-1000, such as 10 - 900, e.g. 100 - 800, preferably 200 - 700, further preferably 200 - 500, 300 - 400, 300 - 350, 350 - 400, 400 - 450 and 450 - 500.

In an aspect of the oligo peptide synthesis apparatus, the vessels comprising a number of wells, a number of columns or combinations thereof.

In an aspect of the oligo peptide synthesis apparatus, each of the vessels having a filter comprising a polystyrene surface or controlled pore glass (CPG).

In an aspect of the oligo peptide synthesis apparatus, the first and second super and sub atmospheric pressure resistant sealing means sealing in pressure interval ranging from vacuum to above atmospheric pressure being from 4 mbar to 20 bar, respectively.

The above object, the above advantage, and the above feature together with numerous other objects, advantages, and features which will be evident from the below detailed description of the present invention are in accordance with the teaching of the present invention obtained by a first method of performing an oligo peptide synthesis by means of the oligo peptide synthesis apparatus, the first method comprising the steps of:
mounting a reaction holder to a revolveable holder of the oligo peptide synthesis apparatus,
revolving the revolveable holder for finding its initial starting position, if the initial starting position is not known from a former run,
revolving, in a step one, the revolveable holder with the reaction holder to be in position under a specific synthesis material line,
discharging synthesis material to a vessel positioned below in the reaction holder from the specific synthesis material line,
measuring, by means of a colour sensor, a status of a material of at least one filter of a vessel, or optionally statuses of more filters of corresponding vessels,
optionally, allowing a timer to run for a predetermined time and sucking synthesis material from the vessel(s), and
determining, on basis of the status(es) of the material(s) of the filter(s) of the vessel(s), whether to discontinue the synthesis in the filter(s) or to continue with the synthesis in the filter(s) i.e. to start from step one again.

The above object, the above advantage, and the above feature together with numerous other objects, advantages and features which will be evident from the below detailed description of the present invention, are in accordance with the teaching of the present invention obtained by a second method of performing an oligo peptide synthesis by means of the oligo peptide synthesis apparatus, the sealed and airtight chamber of the oligo peptide synthesis apparatus comprising an upper chamber section located above the reaction holder and a lower chamber section located below the reaction holder, the method comprising the steps of:
(i) providing a synthesis material to a filter of a vessel of the reaction holder,
(ii) subjecting the upper chamber section 260 to a vacuum while subjecting the lower chamber section 460 to an overpressure or an atmospheric pressure whereby synthesis material being sucked upwardly through the filter of the vessel, and/or
(iii) subjecting the upper chamber section 260 to an overpressure or an atmospheric pressure while subjecting the lower chamber section 460 to a vacuum whereby synthesis material being pushed or pumped down through the filter of the vessel.

The invention will be explained more fully below in connection with preferred embodiments and with reference to the drawings, in which:
fig. 1 shows an overview of an embodiment of the oligo peptide synthesis apparatus positioned in a fume close,
fig. 2 shows a perspective drawing of an embodiment of the oligo peptide synthesis apparatus with supply containers,
fig. 3a and 3b shows a perspective drawing and an air supply drawing of an embodiment of the oligo peptide synthesis apparatus,
fig. 4 shows a perspective drawing of main components of an embodiment of the oligo peptide synthesis apparatus,
fig. 5a shows a perspective view of an embodiment of the oligo peptide synthesis apparatus,
fig. 5b shows a top view of an embodiment of the oligo peptide synthesis apparatus,
fig. 5c shows a detailed machine drawing of an embodiment of the oligo peptide synthesis apparatus,
fig. 6a, 6b and 6c show how two containers are connected in the oligo peptide synthesis apparatus,
fig. 7a, 7b and 7c illustrates a perspective top view, a top view and a side view of a detailed machine drawing of an embodiment of the oligo peptide synthesis apparatus,
fig. 8a, 8b, 8c, 8d and 8e show a perspective view, a top view, a side view of a detailed machine drawing and two cross sectional views of an embodiment of the oligo peptide synthesis apparatus,
fig. 9a and 9d show a perspective view of a detailed machine drawing of a motor drive mechanism of the oligo peptide synthesis apparatus,
fig. 9b shows a top view of a detailed machine drawing of a motor drive mechanism of the oligo peptide synthesis apparatus,
fig. 9c shows a side view of a detailed machine drawing of a motor drive mechanism of the oligo peptide synthesis apparatus,
fig. 10a shows a side view of a motor drive mechanism of the oligo peptide synthesis apparatus,
fig. 10b shows an exploded, perspective view of the motor drive mechanism of the oligo peptide synthesis apparatus.
fig. 11a, 11b, 11c and 11d show a perspective view of a piston mechanism, a top view, a detailed machine drawing of the piston mechanism of the oligo peptide synthesis apparatus and a sectional view of a detail, respectively,
fig. 12a and 12b, 12c and 12d, 12e and 12f show two top views of a container, two machine drawings of a container, two detailed views of a part of a container, respectively.
fig. 13 shows a perspective drawing of a motor, a reaction holder and a number of vessels located in the reaction holder.
fig. 14a, 14b and 14c show a perspective drawing of an indicator system, a machine drawing of the indicator system and a top view of the indicator system, respectively.
fig. 15a and 15b, and 15c and 15d show two examples of an unlocked and a locked state of a reaction holder with vessels, respectively,
fig. 16a, 16b, 16d and 16e each shows an embodiment of a reaction holder,
fig. 16c and 16f each shows an embodiment of a vessel,
fig. 17a, 17b, 17d and 17e each shows an embodiment of a reaction holder, and
fig. 17c and 17f each shows an embodiment of a vessel.

Throughout the drawings, the same reference numerals indicate identical elements or components. In the present specification, components or elements identical to components or elements, respectively, described previously with reference to a preceding figure are designated the same reference numerals.

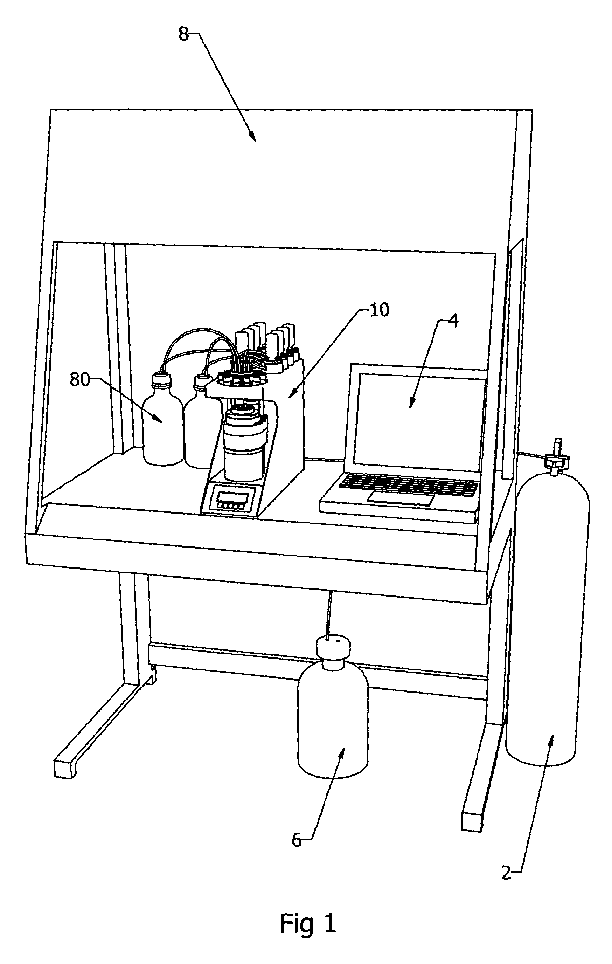

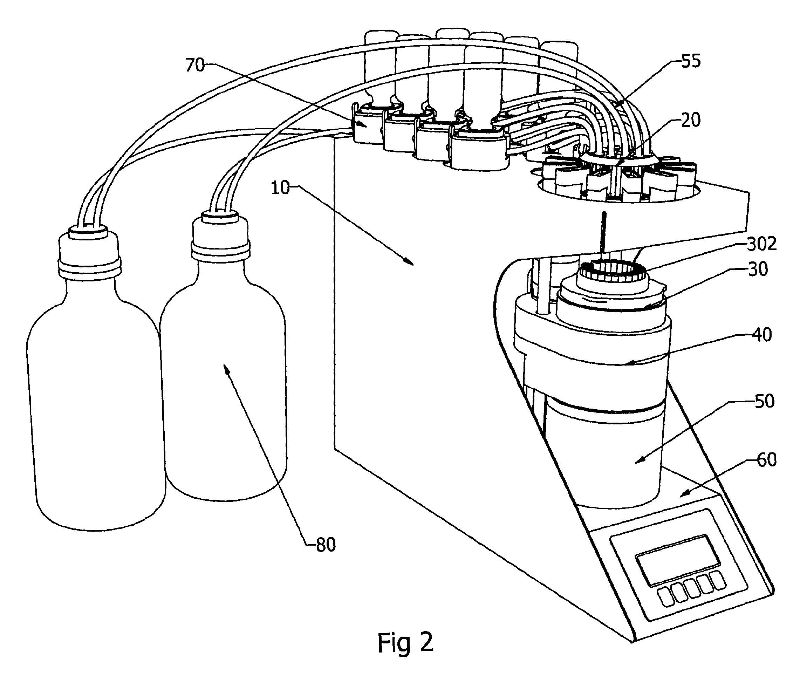

Figs. 1 and 2 illustrate an overview of an embodiment of an oligo peptide synthesis apparatus positioned in a fume closet. The oligo peptide synthesis apparatus 10 is a computer, e.g. by means of an automated PC, denoted by reference numeral 4 controlled apparatus. The oligo peptide synthesis apparatus 10 is located in a fume closet 8 provided with an exhaustion to remove odour from the synthesis.

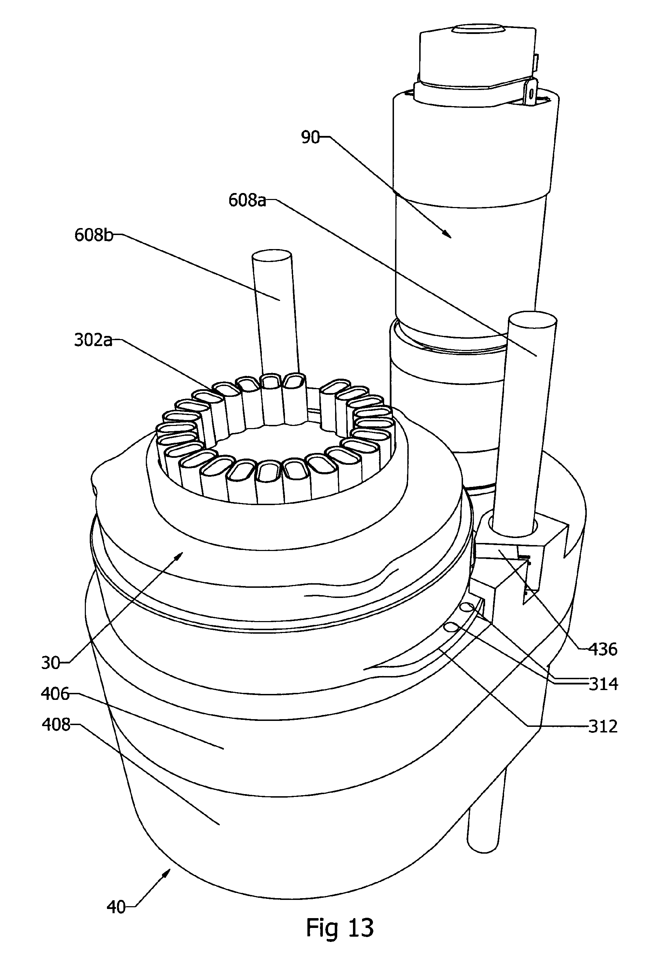

In general, synthesis material, i.e. helping reagents: tetrazol solution, Cap A and Cap B solutions, ion solution and trichloro-acetic acid solution as well as acetonitrile as a rinsing agent from more synthesis material supply containers 80 or a chemical bottle 70 with a bottle manifold are supplied by means of synthesis material lines 55 to vessels located in receptors on a reaction holder 30. The reaction holder 30 is sandwiched between a top cover plate 20 and a motor drive box 40. In the vessel, generally denoted 302, see also Figs. 13, 14b, 15a, 15c, 16a-16f and 17a - 17e, synthesis between synthesis materials takes place. High pressurised dry inert gas 2 is supplied to the oligo peptide synthesis apparatus 10 and is use to control movements and the synthesis.

The movement of the air cylinder 50 can be controlled up and down. The oligo peptide synthesis apparatus 10 is shown in the open state with the air cylinder 50 in it down position.

When the synthesis is performed or after the synthesis is performed, waste materials can be pumped or sucked into a waste container 6.

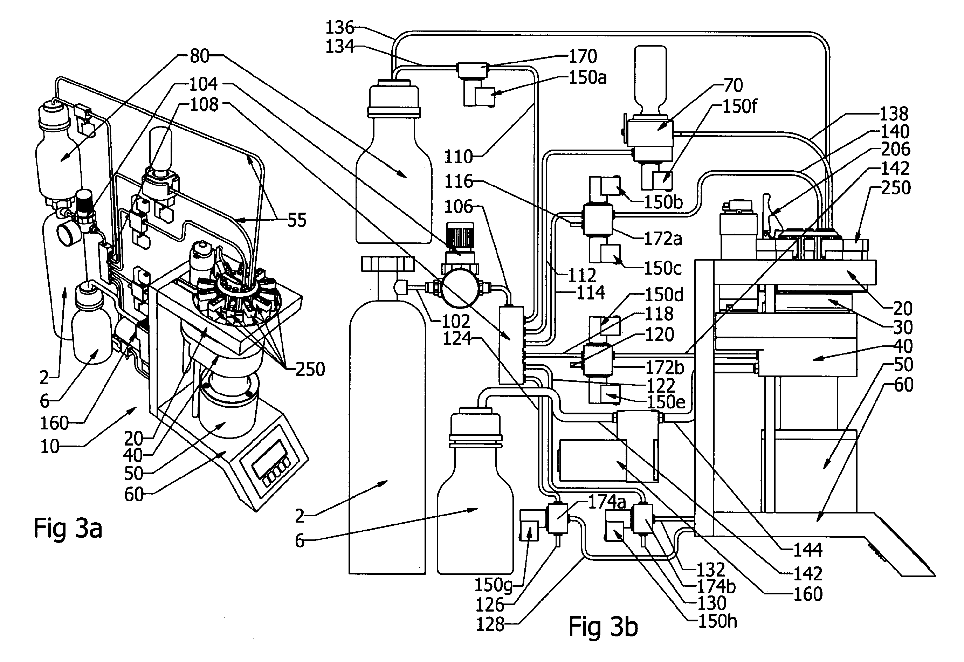

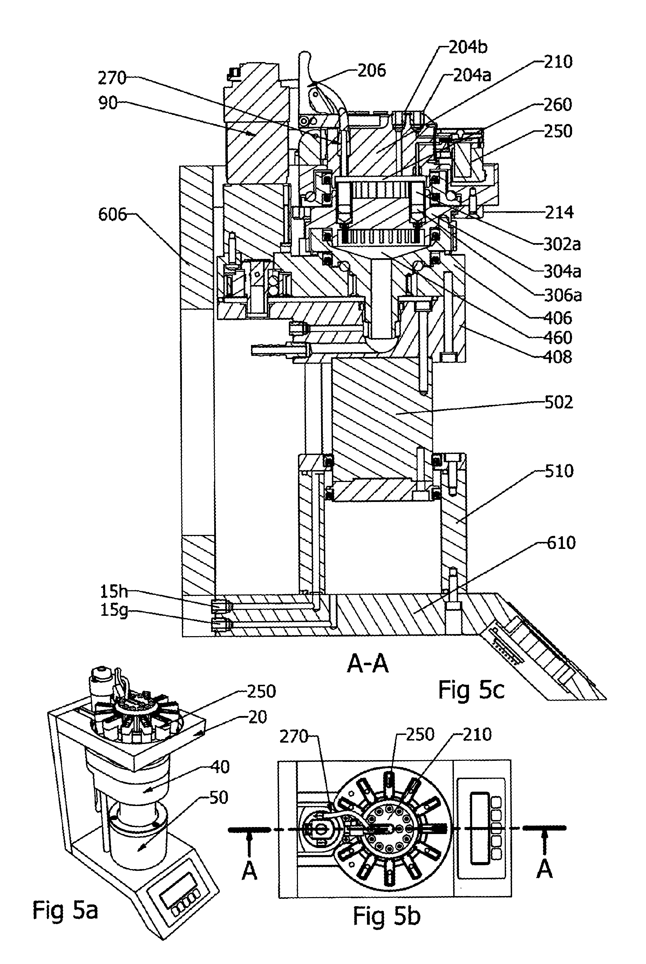

Fig. 3a and 3b illustrate a perspective drawing and an air supply drawing of an embodiment of the oligo peptide synthesis apparatus. The synthesis material supply lines 55 are connected to a manifold 108 which is supplied with high pressure dry inert gas from the container 2. The high-pressure dry inert gas is the sole and main pressure supply to the oligo peptide synthesis apparatus 10 through a tube 102 to a ported regulator 104 through a tube 106 to the manifold 108. The manifold base 172a, the manifold 108, the tubes 114, 116 and 140 and the solenoid valves 150b and 150c are used to direct the inert gas to provide or to relieve a pressure in an upper chamber of the oligo peptide synthesis apparatus. The upper chamber, which is denoted by the reference numeral 260, can be seen in Fig. 5c, is located above the vessels. Likewise, the manifold base 172b, the manifold 108, the tubes 112, 118, 120 and 142 and, in particular, the solenoid valves 150d and 150e are used to direct an inert gas or dry air to provide and to relieve, respectively the pressure in the lower chamber 460 of the oligo peptide synthesis apparatus. The lower chamber, which is denoted by the reference numeral 460, can be seen in Fig. 5c, and is located under the vessels. Hereby, any material present in the vessel between the upper and the lower chambers can be sucked down or pushed up relative to a filter located in the vessel by having the highest pressure in the upper chamber or in the lower chamber, respectively.

The set of tubes denoted by the reference numerals 122, 124, 126, 128, 130 and 132, the two-solenoid valves 150g and 150h and the two manifold bases 174a and 174b control an air cylinder 50, which cylinder 50 is located on a bottom plate 60. Hereby, the movement of the air cylinder 50 can be controlled up and down. Accordingly, the oligo peptide synthesis apparatus 10 can be controlled to be in the closed state as illustrated in the figure or in an open state, respectively.

When only the solenoid valve 150g is powered to open the valve the air cylinder 50 is moved up and the oligo peptide synthesis apparatus 10 enters its closed and operational state. Conversely, with power instead on the other solenoid valve, the solenoid valve 150h, the air through this valve allows the air cylinder 50 to move down with help of the gravity force, and the oligo peptide synthesis apparatus 10 then gets in its open non-working state.

The solenoid valve 150a is applied to direct inert gas 2 from the manifold 108 through a tube 110 and 134 and a manifold base 170 to a chemical bottle or container 80 whereby the bottle or container 80 can be set under pressure which in turn direct any material, e.g. synthesis material, present in the bottle or container through the tube 136 and the solenoid valve 250 to a vessel present in the reaction holder 30. Correspondingly, a solenoid valve 150f and the tube 112 control any synthesis material present in the upside- down located bottle or container 70 through the tube 138 to another vessel present below and located in the reaction holder 30.

Material from the synthesis can be sucked in the waste container 6 through the drain tubes 142 and 144 by means of a vacuum pump 160.

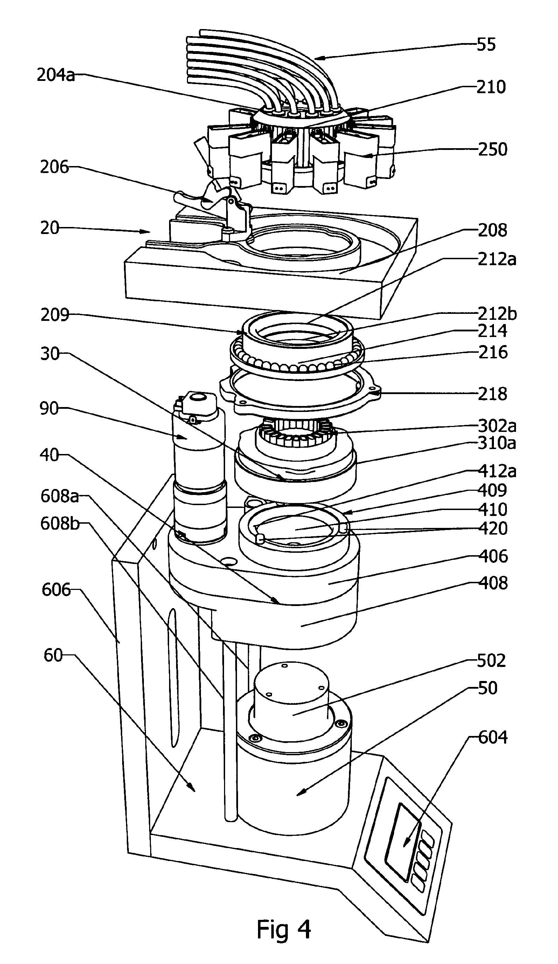

Fig. 4 illustrates a perspective drawing of main components of an embodiment of the oligo peptide synthesis apparatus. The oligo peptide synthesis apparatus basically is made of the following main parts: the top plate 20, the reaction holder 30 with vessels 302a and the motor drive box 40 with the motor 90.

Material supply lines 55, e.g. tubes are mounted in corresponding coupling holes of the carstick fittings 204a which are in fluid communication with the manifold 210. In order to control the discharge of material from the material supply lines 55 a corresponding number of solenoid valves 250 are connected to the material supply lines 55.

The material supply lines 55, the carstick fittings 204a, the manifold 210 and the solenoid valves 250 are mounted on the top plate 208. The top plate 208 is provided with a toggle clamp 206 allowing the top plate 208 to be easily mounted and easily removed, e.g. for maintenance purposes.

In order to seal the reaction holder denoted 30 and 310a, when in operation, a pair of shaft seals 212a and 212b is provided in a holder 209 connecting the reaction holder 30 with the top plate denoted 20 and 208.

Further, in order to enable the reaction holder 30 when in operation to be easily revolved, a number of stainless steel balls 216 are provided in a ball race 214 of the holder 209. Hereby, a minimum force need be applied for the motor 90 to revolve the holder 209 and the reaction holder 30 and, accordingly, the vessels 302a.

A belt driven holder 409 is sealed by means of the shaft seal 412a to the reaction holder 30 when in operational engagement therewith. The belt driven holder 409 is provided with a circumferential drain funnel 410 allowing any used or surplus synthesis material to be drained, e.g. sucked from the drain funnel 410.

A locking plate 218 is provided to lock the holder 209 with the reaction holder 30.

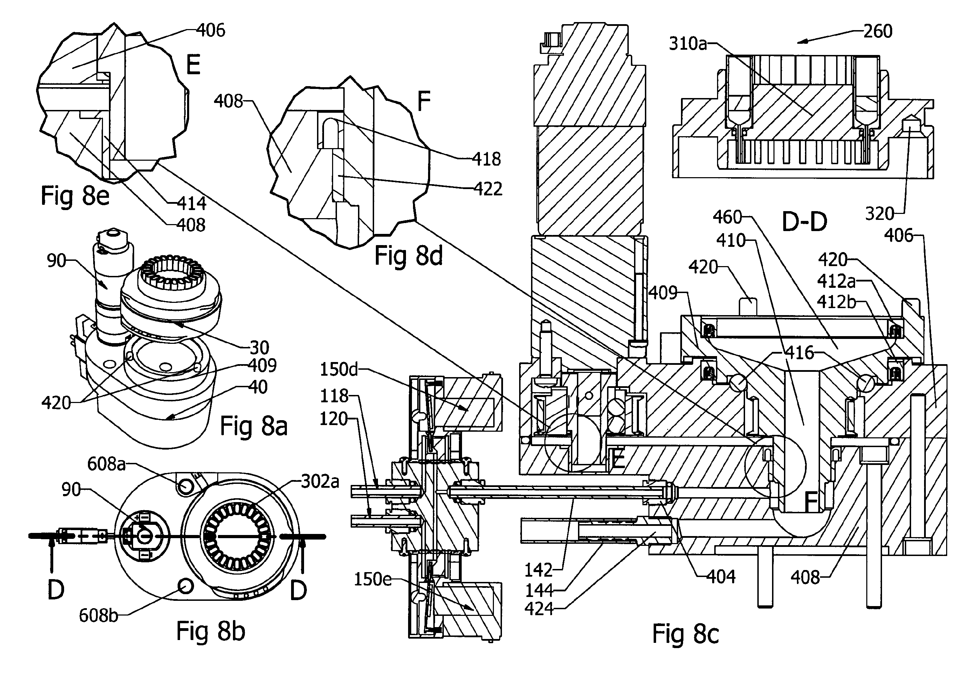

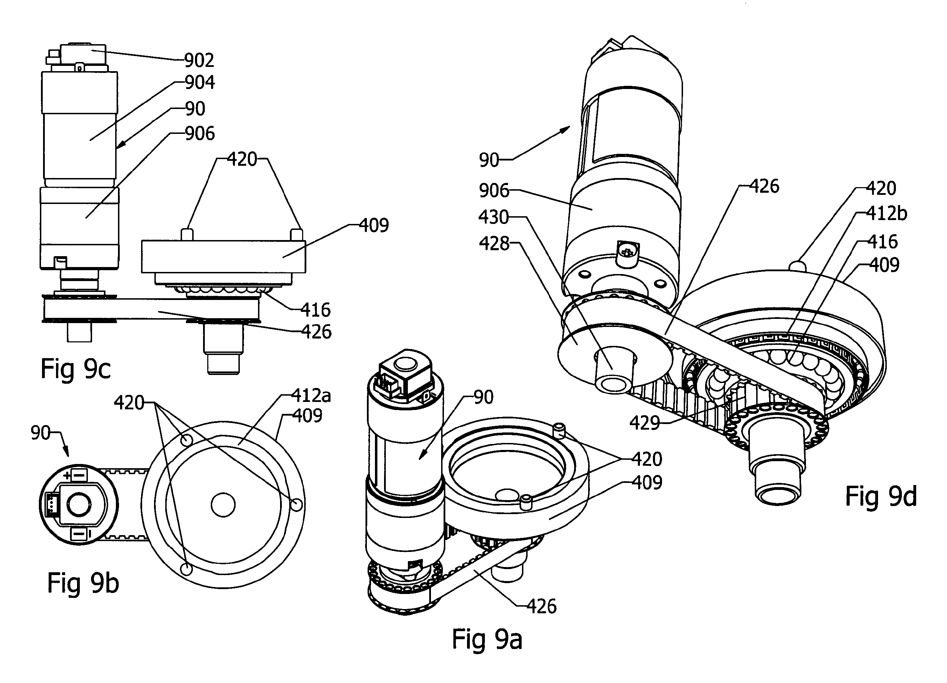

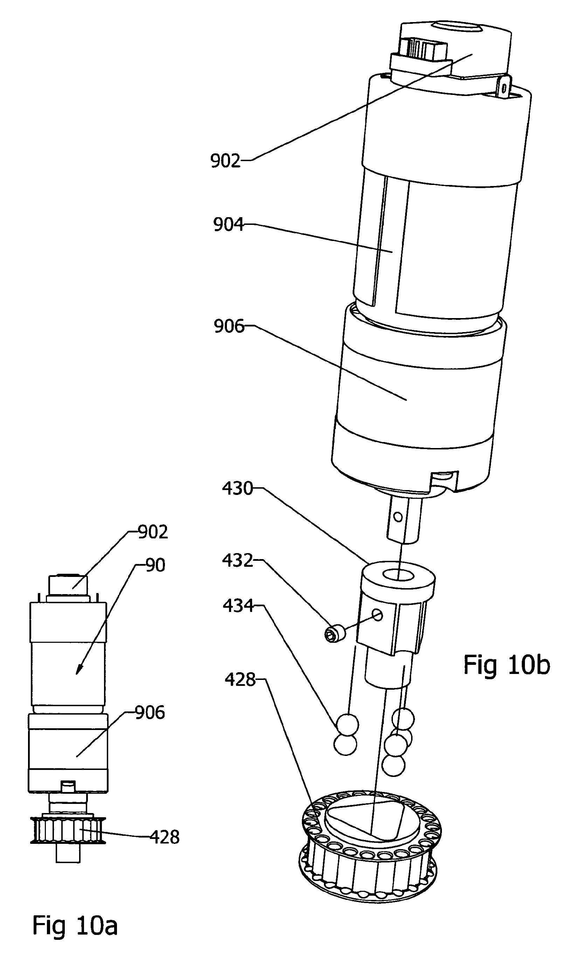

The motor 90 is connected to revolve the belt driven holder 409 and thereby the reaction holder 30. The belt driven holder 409 is provided with a number of upstanding pins or rods acting as carriers 420. These carriers 420, see also Fig. 8c, are, when the piston head 502 of the air cylinder 50 is moved up and the oligo peptide synthesis apparatus 10 enters its closed and operational state, foreseen to be received in a number of carrier holes 320, see e.g. Fig. 8c. Hereby the motor 90 is able to revolve the reaction holder 30 by revolving the belt driven holder 409. The mechanism connecting the motor 90 to the belt driven holder 409 is shown in Figs. 9a - 9d and in Figs. 10a and 10b. The mechanism connecting the motor 90 to the belt driven holder 409 is encased in the motor drive box 408. Access to the motor 90 and its mechanism is possible by removing the lid 406.

In order to stabilise and properly guide the movement of the motor drive box 40 with the motor 90 vertically two upstanding parallel guide rods 608a and 608b are provided.

The oligo peptide synthesis apparatus is further provided with a display and a keyboard, e.g. a foil keyboard 604. Hereby an operator of the oligo peptide synthesis apparatus can enter parameters by means of the keyboard, e.g. speed, which bottles, containers and synthesis material to apply, etc. to control the synthesis to be performed or under way and to receive status information, e.g. operational status, service, error or fault information, etc. back from the display.

Fig. 9a and 9d each illustrates a perspective view of a detailed machine drawing of a motor drive mechanism of the oligo peptide synthesis apparatus. Fig. 9b illustrates a top view of a detailed machine drawing of a motor drive mechanism of the oligo peptide synthesis apparatus and fig. 9c illustrates a side view of a detailed machine drawing of a motor drive mechanism of the oligo peptide synthesis apparatus. Fig. 10a illustrates a side view of a motor drive mechanism of the oligo peptide synthesis apparatus and fig. 10b illustrates an exploded, perspective view of the motor drive mechanism of the oligo peptide synthesis apparatus. The motor 90, see Fig. 9a, revolves the belt driven holder 409 by means of a toothed belt 426. As previously discussed, the carriers 420 of the holder 409, see also Fig. 8c, are, when the piston head 502 of the air cylinder 50 is moved up and the oligo peptide synthesis apparatus 10 enters its closed and operational state, received in a number of carrier holes 320, see Fig. 8c belonging to the reaction holder 302, or see e.g. Fig. 4 for the reaction holder 30. Hereby, the motor 90 is applied to revolve the not shown reaction holder to a proper position. The belt driven holder 409 is sealed by means the shaft seal 412a or 412b to the reaction holder 30 and the motor drive lid 406 when in operational engagement with the reaction holder 30. Stainless steel balls 416 provide a low friction between the belt driven holder 409 and the underlying supporting surface. The motor 90 is provided with an encoder 902 enabling to determine the revolved position of the motor. Preferably, the motor 90 is a 24 V DC motor 904 as illustrated and the motor 90 is provided with a gearbox 906 having a gear ratio of 125:1, thus, a speed of the motor 90 is gearing down 125 times. The encoder provides 6 x 125 = 750 pulsed per revolution of the belt driven holder 409 corresponding to one revolution of the reaction holder 30 as illustrated in Fig. 4. The motor 90 is provided on its shaft with a flange coupling 430, which is mounted by a screw 432, and a fitting 434, e.g. as balls into the toothed pulley 428. The toothed pulley 428 connects the toothed belt 426 to a corresponding toothed pulley 429 of the belt driven holder 409.

Fig. 5a illustrates a perspective view of an embodiment of the oligo peptide synthesis apparatus, fig. 5b illustrates a top view of the embodiment of the oligo peptide synthesis apparatus, and fig. 5c illustrates a detailed machine drawing of the embodiment of the oligo peptide synthesis apparatus. A back bracing 606 extending parallel with the longitudinal direction of the oligo peptide synthesis apparatus supports the oligo peptide synthesis apparatus. The piston rod 502, shown in the upper closed position, together with the motor drive box 40, is movable up and down parallel with the back bracing 606 by controlling air or gas through and by means of the solenoid valves 150f and 150g as was discussed in relation to Fig. 3b. By providing air or gas through an inlet 15g, the piston rod 502 with the motor drive box 40 is forced by the pressure to move up, and conversely, if air or gas instead is supplied to and through the other inlet 15h the piston rod 502 with the motor drive box 40 moves down. A sole plate 610 supports the oligo peptide synthesis apparatus. A vessel 302a is shown located in the reaction holder, see Figs. 2, 3 or 4 for the reaction holder 30.

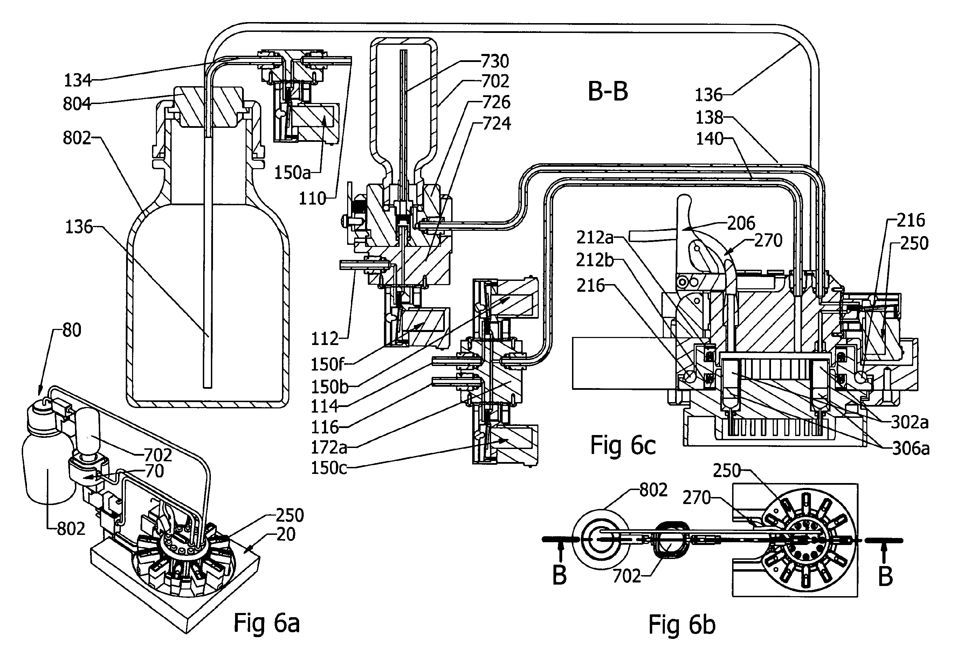

Fig. 6a, 6b and 6c illustrates how two containers are connected in the oligo peptide synthesis apparatus. The containers are designated by the reference numerals 702 and 802. The bottle or container 802 can be set under pressure which in turn direct any material, e.g. synthesis material, present in the bottle 802 or container 802 through a tube 136 to a vessel 302a present in the reaction holder 310a. Correspondingly, a tube 138 directs any synthesis material present in an upside down standing bottle 702 or container 702 to another vessel. The bottle or container 802 is provided with a bottle cap for sealing the bottle 802 through which the tube 136 is directed to the vessel 302a. Another tube 134 is used to feed air - controlled by a solenoid valve 150a - to the bottle 802 e.g. inert air or gas is supplied from the container 2 as shown in Figs. 3a and 3b. The tube 110 is connected to the manifold base 170 as shown in Fig. 3b. The upside down standing bottle 702 or container 702 is provided with a bottle cap 726 through which the tube 138 is directed. A bottle manifold 724 is connected to a tube 112 from which pressure to the bottle or container 702 is provided by means of the air tube 730. A solenoid valve 150f controls the operation of the bottle or container 702.

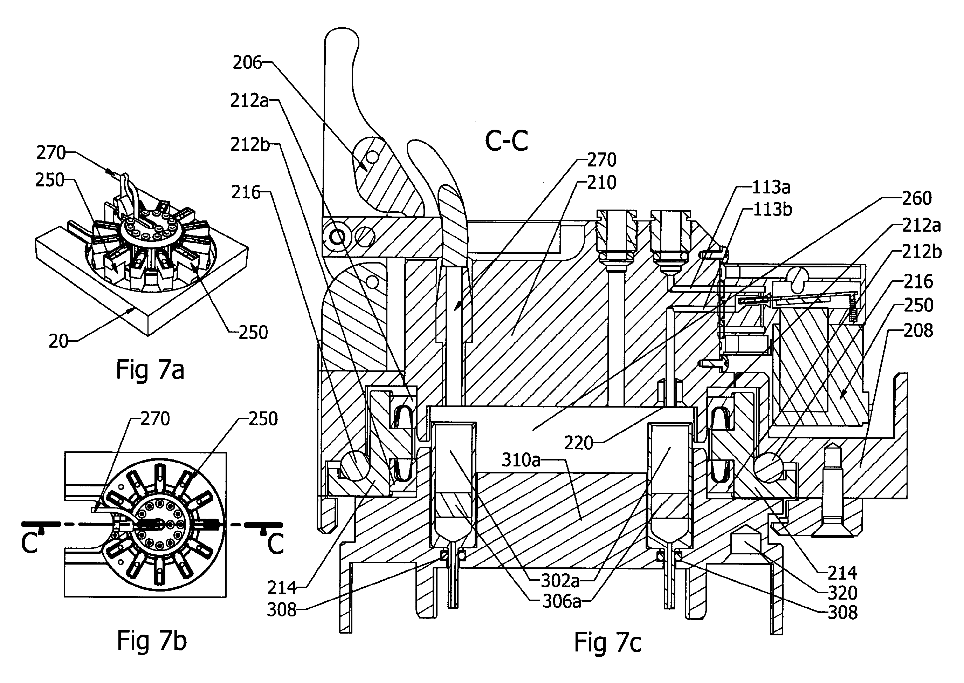

Another solenoid valve 150c is used to relieve a pressure in an upper chamber of the oligo peptide synthesis apparatus by means of a tube 140 directed into the upper chamber (see reference numeral 260 in Fig. 7c), which is located in an area over the reaction holder 310a. A tube 114 directs gas or air from the manifold base 172a. A tube 116 relieves gas or air from the upper chamber of the oligo peptide synthesis apparatus and the tube 116 is controlled by solenoid valve 150c.

A further solenoid valve 150b is used to direct the inert gas or air in order to provide a pressure in the just mentioned upper chamber of the oligo peptide synthesis apparatus.

Fig. 7a, 7b and 7c illustrates a perspective top view, a top view and a side view of a detailed machine drawing of an embodiment of the oligo peptide synthesis apparatus. A reaction holder 310a is provided with a number of vessels of which a vessel 302a is shown. The vessel 302a is provided with a filter 306a with a polystyrene surface or a so-called CPG known by the person skilled in the art. Within the filter 306a of the vessel 302a, the contemplated synthesis is intended to take place. Synthesis material is provided to the filter 306a of the vessel 302a by means of the tubes 113a and 113b and through a pipe branch 220, i.e. the solenoid valve 250 is opened when the synthesis material is provided to the filter 306a.

A fibre optic cable 270 is provided in the top plate 210 or in the manifold 208. The fibre optic cable 270 acts as a light guide and is connectable to en external not shown colour sensor, e.g. Sick CSL 1 Colour sensor Part no. CLS 1- P 11. Hereby, it is possible to sense the status of a synthesis performed or being performed, e.g. by measuring a colour of the material in the filter 302a at the de-blocking step in a nuclide acid synthesis. For example, each time the synthesis reaction holder is revolved a step further, the colour sensor can measure the colour of the material of the filter 302a then present below under the colour sensor. Hereby, one single colour sensor can currently measure the colour of the material of the filter present under the colour sensor, after the next revolving step of the synthesis reaction holder, the colour of the material of the filter of the next, next to provided vessel can be measured, etc. This has the advantage that only one colour sensor need be calibrated.

A colour, e.g. strong orange colour, may indicate that couplings in the synthesis of the material in the filter 302a were successfully performed, whereas a light orange colour or no colour of the material in the filter 302a may indicate that the couplings in the synthesis was not successfully performed. Accordingly, the computer 4 may use the colours read from and provided through fibre optic cables associated with corresponding vessels to determine the statuses of the materials in the filters of the vessels.

In another embodiment of the invention, a number of fibre optic cables is provided and aligned in the top plate 210 or in the manifold 208 to obtain a corresponding number of statuses of all filters of all vessels provided below in the reaction holder. Hereby, such many colour sensors can simultaneously measure the colours of the corresponding materials of the filters of the vessels present under these colour sensors. This has the advantage that such colour sensors keep track of the synthesis for all filters simultaneously and with no waiting time delays, e.g. there is no need to revolve the reaction holder with the filter to be measured below a single colour sensor as discussed above.

An o-ring, denoted by the reference numeral 308, is provided to the seal the vessel 302a tight to and in the reaction holder 310a. Alternatively, a bottom end of the vessel itself is provided with a surface sealing the vessel 302a tight to the reaction holder 310a.

The carrier hole 320 of the reaction holder 310a is applied to connect the reaction holder 310a to the below positioned belt revolveable holder, which is not shown but can be seen in Fig. 8c and is referenced by 409. The belt driven holder 409 is provided with a number of upstanding vertically pins or rods acting as carriers 420. These pins or rods 420, see also Fig. 8c, are when the piston head of the air cylinder is moved up and the oligo peptide synthesis apparatus 10 enters its closed and operational state, foreseen to be received in a number of carrier holes 320 of the reaction holder 310a, see Fig. 8c. Hereby the reaction holder 310a is revolved when the belt driven holder 409 is revolved, of course only when the oligo peptide synthesis apparatus is closed and ready to be operated.

In an embodiment of the invention, which is not shown in any of the figures, the carriers, e.g. pins and rods, are provided to extend out from the below side of the reaction holder, and the carrier holes is e.g. bored or drilled in the top surface of belt driven holder. Both carriers serve the same purpose as described above. When the piston head of the air cylinder is moved up and the oligo peptide synthesis apparatus enters its closed and operational state, the pins and rods of the reaction holder are received in a corresponding number of carrier holes provided in the top of the belt driven holder. Hereby, the reaction holder revolves with the belt driven holder when the oligo peptide synthesis apparatus is closed and the motor is powered.

Fig. 8a, 8b, 8c, 8d and 8e illustrate a perspective view, a top view, a side view of a detailed machine drawing and two cross sectional views of an embodiment of the oligo peptide synthesis apparatus. Carriers 420 are provided on top of the belt driven holder 409. The carriers 420 are received in a number of carrier holes of which only the carrier hole 320 is shown. The carrier holes are provided, e.g. drilled or bored in the bottom of the reaction holder 310a. When the motor 90 revolves the belt driven holder 409 the reaction holder 310a revolves accordingly. The reaction holder 310a is provided with a number of vessels, see Fig. 8a, of which only the vessel 302a is shown in Fig. 8c. A shaft seal 412a tightly seals the belt driven holder 409 tight to the reaction holder 310 when the oligo peptide synthesis apparatus is closed. Another shaft seal 412b seals the belt driven holder 409 to the motor drive lid 406. A further shaft seal 418 seals the motor drive box 408 and the lower chamber 460 to one another. The two bearings 414 and 422 enable the belt driven holder 409 to revolve with a low frictional force relative to the motor drive box 408. Stainless steel balls 416 - see also Fig. 9c - provide a low friction between the belt driven holder 409 and an underlying supporting surface.

The solenoid valves 150d and 150e are used to direct an inert gas or dry air to provide and to relieve, respectively the pressure in the lower chamber 460 of the oligo peptide synthesis apparatus. Air or gas is supplied to the solenoid valve 150d by means of a tube 118. Air or gas is relieved from the lower chamber 460 by means of the solenoid valve 150e through a tube 120. The air or gas from the solenoid valve 150d through the tube 118 is led through a further tube 142 and a carstick cartridge or fitting 404 into the lower chamber 460. A drain tube 144 connected to a fitting 424 enables draining of the lower chamber 460, e.g. by sucking.

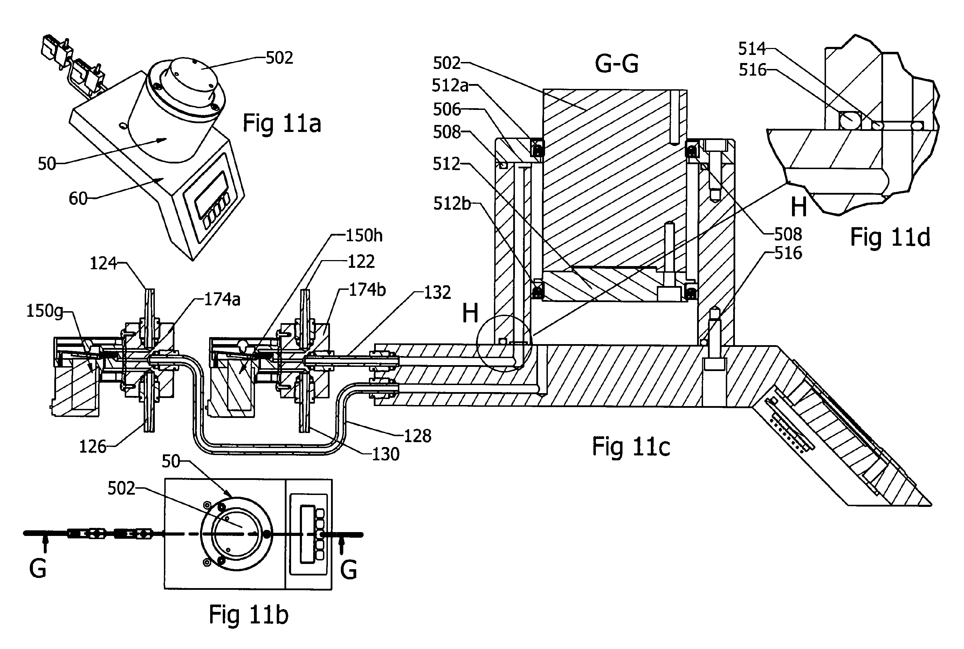

Fig. 11a, 11b, 11c and 11d illustrate a perspective view of a piston mechanism, a top view, a detailed machine drawing of the piston mechanism of the oligo peptide synthesis apparatus and a sectional view of a detail, respectively. A piston rod 502 with a piston head 512 can be moved up and down. A pair of solenoid valves 150g and 150h controls the movement of the piston rod 502.

When the solenoid valve 150g is powered, i.e. powered to open the valve inside it, the piston rod 502 of the air cylinder 50 is moved up and the oligo peptide synthesis apparatus enters its closed and operational state. A set of tubes 124, 126 and 128 and a manifold base 174a are connected to the solenoid valve 150g. The tube 128 directs air or gas to push the piston rod 502 upwards.

Conversely, with power instead on the other solenoid valve, the solenoid valve 150h, the pressurised air or gas through this valve allows the piston rod 502 of the air cylinder 50 to move down with help of the gravity force, and the oligo peptide synthesis apparatus gets in its open, non-working state. A set of tubes 122, 130 and 132 and a manifold base 174b are connected to the solenoid valve 150h. The tube 132 directs air or gas to allow the piston rod 502 to move downwards.

A cylinder lid 506 is sealed to the piston rod 502 by means of the pair of O-rings 508. An additional pair of O-rings 514 and 516 seals the piston mechanism. A pair of shaft seals 512a and 512b seals and guides the piston rod 502.

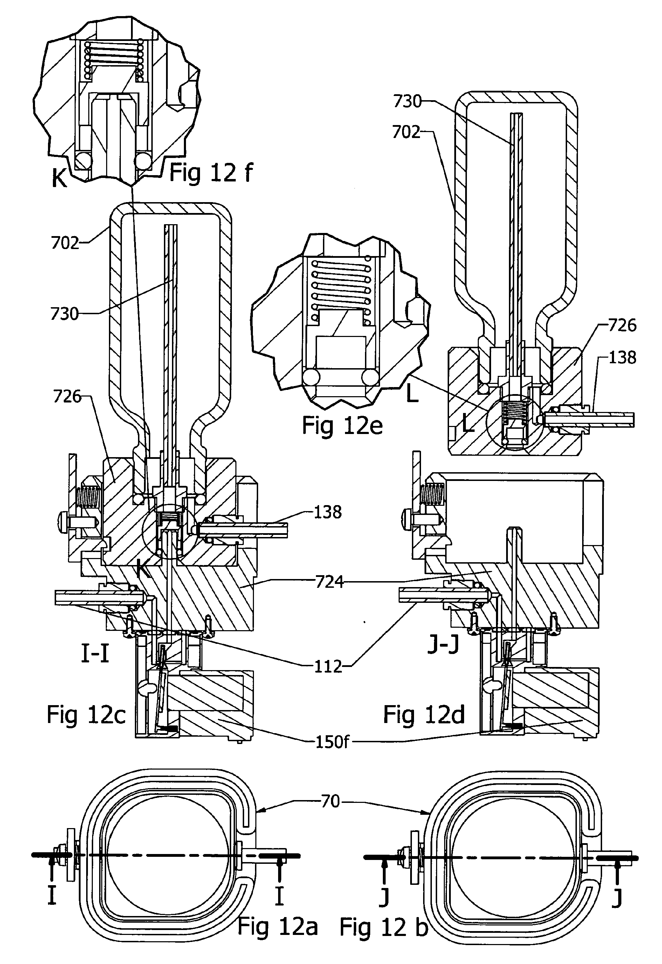

Fig. 12a and 12b, 12c and 12d, 12e and 12f illustrate two top views of a container, two machine drawings of a container, two detailed views of a part of a container, respectively. The explanation and the reference numerals given for the Figs. 6a, 6b and 6c apply correspondingly.

Fig. 13 illustrates a perspective drawing of a motor, a reaction holder and a number of vessels located in the reaction holder. The motor 90 is support of a housing of the oligo peptide synthesis apparatus. The reaction holder 30 is provided with a number of vessels denoted by the reference numeral 302a. More embodiments of vessels are illustrated in 16a - 16f and 17a - 17f. The motor drive box 40 and the motor 90 are stabilised and guided by two vertically upstanding parallel guide rods 608a and 608b. An optical switch 436 is provided as a part of the oligo peptide synthesis apparatus. The optical switch 436 detects which type of reaction holder 30 that is mounted in the oligo peptide synthesis apparatus by means of one or more indicator holes of which two are shown as indicated by the reference numeral 314. The one or more indicator holes are provided in cam plate 312 being part of the reaction holder 30.

By means of e.g. 2 detectors for detecting zero, one or two holes, 4 possibilities or variants of the reaction holder 30 can be coded. Correspondingly, three holes may be used to code 8 variants of the reaction holder 30. Four holes may be used to code 16 variants of the reaction holder 30. Five holes may be used to code 32 variants of the reaction holder 30. Six holes may be used to code 64 variants of the reaction holder 30. N holes may be used to code 2 in the power of N (2, 4, 8, 16, 32, 64, 128, 256, 512, 1024, 2048, 4096, 8192, etc) variants of the reaction holder 30. The 2, 3, 4, 5.. or N holes may then be applied to code which type of vessels and the numbers of vessels which are intended and are actually located in a reaction holder given a specific, unique code defined by the location of holes. As an example, such holes may be applied to code any of the embodiments of the vessels and reaction holders which are illustrated in 16a - 16f and 17a - 17f.

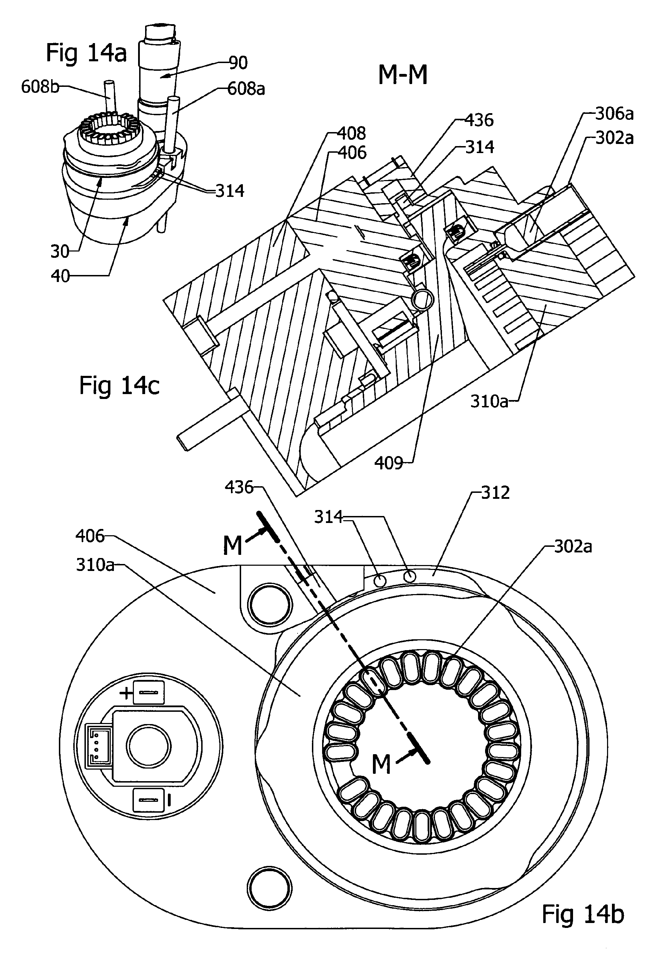

Fig. 14a, 14b and 14c illustrate a perspective drawing of an indicator system, a machine drawing of the indicator system and a top view of the indicator system, respectively. Indicator holes, of which two are illustrated in Fig. 14a as indicated by the reference numeral 314, are in general applied to code, decode and identify which reaction holder 30 or 310a that is mounted in the oligo peptide synthesis apparatus. The one or more indicator holes 314 are provided in a cam plate 312 of the reaction holder 310a as illustrated in Fig. 14b. The one or more indicator holes 314 indicate e.g. which type of vessel 302a and/or the number of vessels mounted or mountable in the reaction holder 30 or 310a. An optical switch 436 is provided on top of the motor drive lid 406. The optical switch 436 detects which indicator hole(s) 314, which have been provided in the reaction holder, and which consequently is/are applied to code the reaction holder 30 which is mounted in the oligo peptide synthesis apparatus. Subsequently, by reading the indicator hole(s) 314 by means of the optical switch 436 of the motor drive lid 406, the type of vessel 302a and/or the number of vessels in fact mounted in the reaction holder 30 or 310a can be decoded. The decoding of the type and/or the number of vessels mounted in the reaction holder typically takes place prior to starting the operation, e.g. the syntheses in the vessels of the oligo peptide synthesis apparatus.

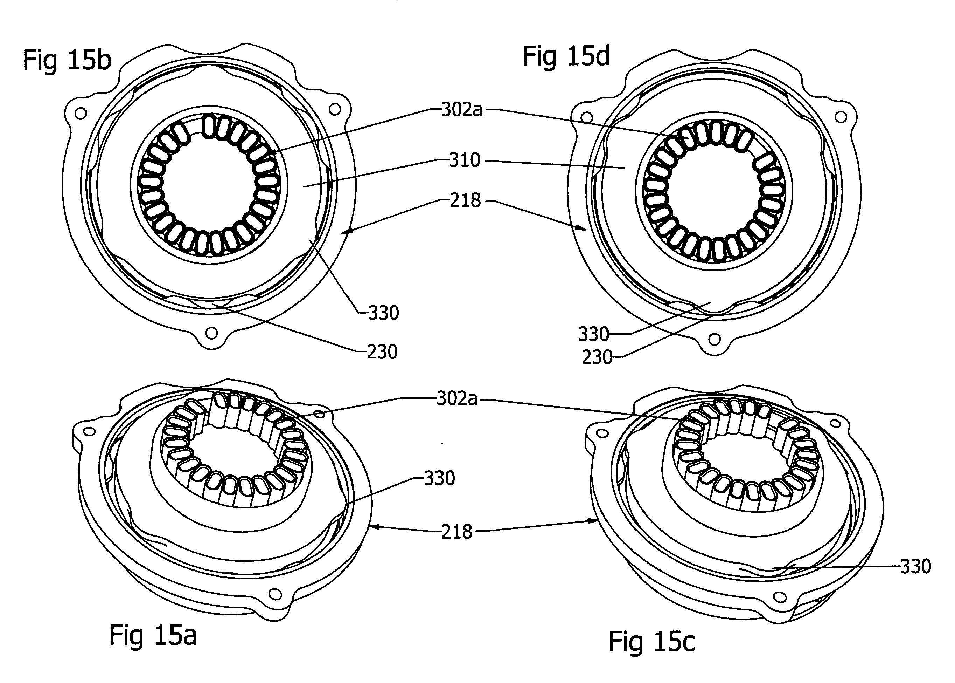

Fig. 15a and 15b, and 15c and 15d illustrate two examples of an unlocked and a locked state of a reaction holder with vessels, respectively. The reaction holder is designated with the reference numeral 310 and the vessels are designated with the reference numeral 302a. The oligo peptide synthesis apparatus 10, see Fig. 4, is provided with a locking plate or ring 218, which in general is applied to lock the reaction holder 30 or 310 to the top plate 208 with the holder 209 sandwiched between the reaction holder 30 or 310 and the top plate 208. When oligo peptide synthesis apparatus 10 is opened, see Fig. 4, the locking plate or ring 218 is in its locked position used to ensure that the reaction holder 30 or 310 is maintained mounted to the top plate 208, even when the motor drive box 40 is controlled to move downwardly.

The locking plate or ring 218 in general acts as a bayonet lock in relation to the reaction holder 30 or 310, the bayonet lock has a non locked state as depicted in fig. 15a and 15b and a locked state as shown in fig. 15c and 15d. When the locked reaction holder 30 or 310 is turned relatively to the locking plate or ring 218, the reaction holder 30 or 310 can be separated from the locking plate or ring 218 and accordingly from the top plate 208, e.g. if an operator is to remove the reaction holder 30 from the top plate 208 of an opened, stopped oligo peptide synthesis apparatus 10 of Fig. 4.

Fig. 15a and 15b illustrate two examples of an unlocked reaction holder 310 in that a locking dowel 330 of the locking plate or ring 218 is not positioned over a locking fitting 230 of the reaction holder 310.

Conversely, Figs. 15c and 15d each illustrate an example of a locked reaction holder 310. The reaction holder 310 is locked with the locking plate or ring 218 in that the locking dowel 330 of the locking plate or ring 218, is positioned, e.g. turned to be located over the locking fitting 230 of the reaction holder 310.

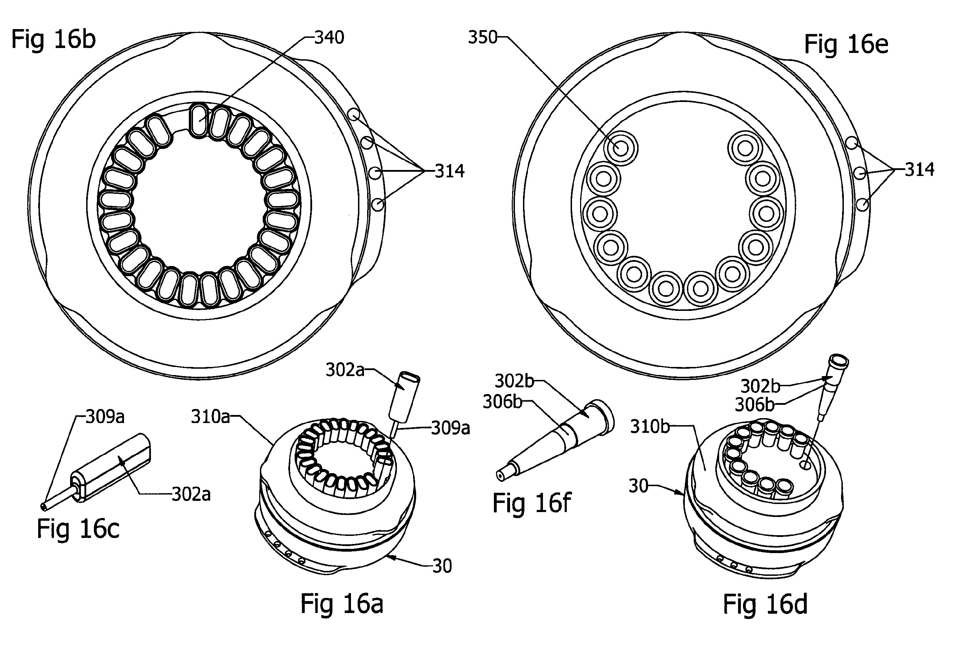

Fig. 16a, 16b, 16d and 16e each illustrates an embodiment of a reaction holder, and fig. 16c and 16f each show an embodiment of a vessel. A vessel 340 with an oblong cross-sectional area can be mounted along with other similar shaped vessels located along a periphery of a circle in the reaction holder 310a in Fig. 16b. Twenty-four of such identical oblong shaped vessels are located along the periphery of the circle. The vessel 302a of Fig. 16c is intended to be located in the reaction holder 310a of Fig. 16b, the reaction holder 310a is shown in a perspective drawing in Fig. 16a. By such a configuration, the effective filter area of each of the vessels is 23 mm2.

In another embodiment of the invention, a vessel 350 with a circular cross-sectional area can be mounted along with other similar circular shaped vessels located along a periphery of a circle in the reaction holder 310b in Fig. 16e. By such a configuration, the effective filter area of each of the vessels is 11 mm2. E.g. 12, 16 or 18, etc. of such identical vessels are located along the periphery of the circle. The vessel 302b is provided with a filter 306b, in which the reaction is intended to take place. The vessel 302b of Fig. 16d is intended to be located in the reaction holder 310b of Fig. 16e, which reaction holder 310b also is shown in the perspective drawing of Fig. 16d.

An end 309a of the vessel 302a may be provided with a soft surface, a rubber sleeve or an o-ring in order to properly seal the bottom end of the vessel 302a to the reaction plate or holder 310a, in which the vessels 302a is to be mounted.

The reaction holder 310a is provided with four indicator holes 314, whereas the reaction holder 310b only is provided with three indicator holes 314. By means of the four and the three indicator holes, the two different shaped reaction holders 310a and 310b are distinguishable from another by reading the indicator holes.

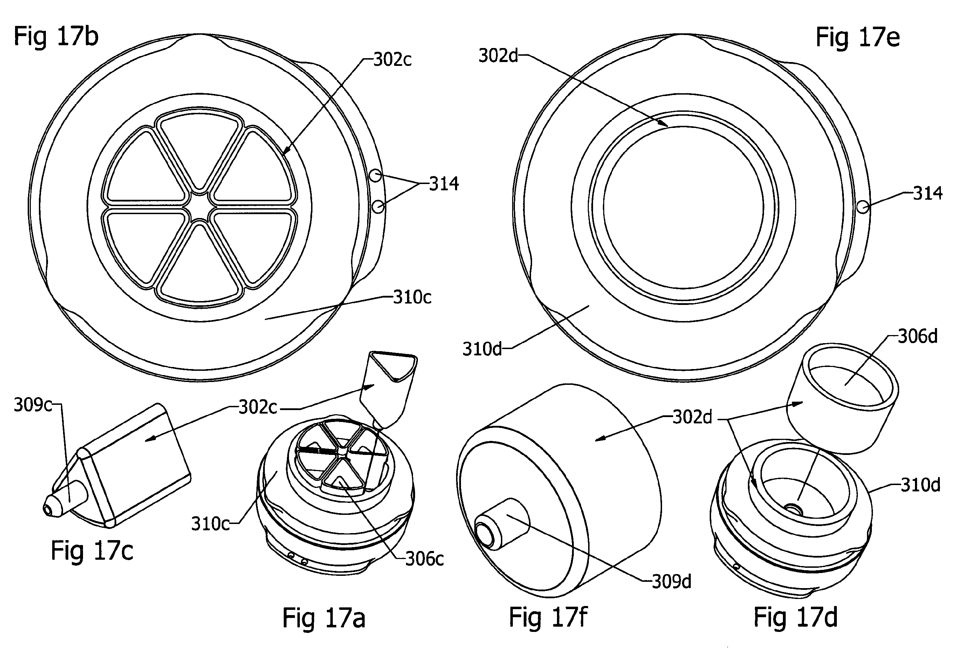

Fig. 17a, 17b, 17d and 17e each illustrates an embodiment of a reaction holder, and fig. 17c and 17f each illustrates an embodiment of a vessel. A vessel 302c can be mounted along with other similar shaped vessels in the reaction holder 310c. Six of the vessels 302c exactly cover a circular shaped compartment thus no space in such a configuration of such six identical shaped vessels are lost.

Alternatively, in another embodiment of the invention, a bigger sized vessel for a reaction needing a bigger reaction space and volume, e.g. a cylindrical shaped vessel 302d, can be mounted solely in a reaction holder 310d dedicated for such a high volume reaction. The reference numeral 306d illustrates a filter of the vessel 302d. An end 309c or an end 309d of the vessel 302c or vessel 302d, respectively may be provided with a soft surface, an o-ring or a sleeve made of rubber in order to properly seal the two bottom ends of the two vessel to the reaction plate or holder in which the two vessels are to be mounted. The reaction holder 310c is provided with two indicator holes 314, whereas the other reaction holder 310d only is provided with one indicator hole 314. By means of the different numbers of indicator holes the two different shaped reaction holders can be distinguished from another.

### The oligo peptide synthesis apparatus is applied as follows:

The reaction holder 30 is mounted in the apparatus, e.g. on top of the holder plate 209. Typically this operation takes place without the use of hand-tools and in an open stage of the apparatus 10, i.e. the reaction holder 30 and belt driven holder 409 are not connected initially since the cylinder is in its lower position. The belt driven holder 409 can be revolved by means of a motor 90 connected to it through means of a toothed belt. The motor is e.g. a DC or a stepper motor with a gearbox and/or with circuitry, which provides information of the revolved position of the motor 90. The information is either in the form of an analogue or a digital pulse train, e.g. a PWM pulse width modulation. Alternatively or additionally, the information provides the absolute revolved position of the belt driven holder 409, the information is e.g. to be interpreted as angles between 0 and 360 degrees.

Prior to the mounting of the reaction holder, the reaction holder is provided with a number of vessel(s) needed for the synthesis(e)s and another lower or a like number of containers are supplied (i.e. filled or taken from stock already filled) with synthesis material, these containers of course are connected to material synthesis lines and solenoid valves; dry or inert air or gas is secured to be provided to the apparatus (and with the right pressure), e.g. from a bottle prior to use, i.e. to push the synthesis material, alternatively the synthesis material may be pumped,
a software program is present and loaded into a memory of the personal computer and by means of this program, a command is given with the result that the apparatus enters a closed stage, i.e. the reaction holder 30 and belt driven holder 409 are sealibly forced together by means of the cylinder 50, which is controlled to move to its upper position.

Now the apparatus is in the desired stage, i.e. the apparatus is closed, vessels are in place, e.g. in corresponding receptors of the reaction holder, and the containers are ready with the synthesis material needed,
optionally, the software program then revolves the belt driven holder (and thereby the reaction holder coupled to it on top of it) by means of power provided to the motor and to a belt connected to a toothed pulley on a shaft of the motor to find the belt driven holders' initial position, e.g. when an index point of the holder is opposite a sensor, during the revolving, the software program has found the initial position of the reaction holder. However, if the initial position of the reaction holder is known from a former run, from a PWM controlled motor or from the position of a stepper motor, there is no need to revolve the belt driven holder to find its initial position again.
1) Subsequently, the software program revolves the belt driven holder with the reaction plate or holder further in order to position the reaction holder such that a specific vessel (or more specific vessels) is located under a specific synthesis material line (or more specific synthesis material lines).
2) Subsequently, the software program discharges synthesis material to the specific vessel, alternatively the software program discharges synthesis materials to the specific vessels.
2a) Subsequently, the software program measures, by means of one or more colour sensors, a status of a material of a filter of a vessel or statuses of materials of filters of corresponding vessels.
3) Subsequently, as an option, the software program allows a timer (e.g. software or hardware implemented) to run out, during this time the synthesis material(s) syntheses in the filter(s) of the specific vessel(s),
4) and, if needed at this stage of the process as a further optional step, a vacuum pump is controlled to suck specific synthesis material(s) from the specific vessel(s).

If the synthesis requires the addition of more synthesis material(s), e.g. determined from the status measured by means of one or more colour sensors, the method loops back to 1) and continues from this point. If, however, the synthesis requires no more synthesis material, or the status (e.g. a non orange colour) measured on the colour sensor(s) determined that the synthesis was unsuccessfully performed for a particular vessel, the oligo peptide synthesis apparatus will ignore this particular vessel in the subsequent operation(s), e.g. no further synthesis material will be added to this particular vessel.

Finally, when all possible vessels have been synthesised, the apparatus enters an open stage again, i.e. the cylinder 50 is controlled to move to its lower, down position, and the reaction holder 30 can then be taken out from the apparatus without the use of any handtool, e.g. for a subsequent analysis of the materials now contained in its vessel(s), for replacement, for cleaning, for cleavage, for evaporation, for concentration, for dehydration, for replacement and/or for addition or one or more vessels.

By providing a vacuum over the reaction holder 30, i.e. in the upper chamber 260 and an overpressure below the reaction holder 30, i.e. in the lower chamber 460, it is possible to "draw", i.e. suck material up and through the filter 306 in which some synthesis process takes place in the vessel 302.

Alternatively, or in addition thereto, by providing an overpressure over the reaction holder 30, i.e. in the upper chamber 260 and a vacuum below the reaction holder 30, i.e. in the lower chamber 460, it is possible to "push" material down to and through the filter 306 of the vessel 302.

Thus it is possible to push and/or suck material speedily and effectively, e.g. chemicals, down and/or up and through the filter 306 of the vessel 302 by controlling the pressures appropriately in the upper 260 and lower chamber 460.

The same functionality as describe above can be achieved by replacing the vacuum with atmospheric pressure.

In these ways, the material or chemicals is/are applied more effectively to and/or through the filter and consequently, the reaction, which takes place in the filter 306 of the vessel 302, is easy controllable and thus more speedily and efficiently performed. Hereby, the apparatus speeds up the provision of synthesis material to and through the filters of the vessels, and the apparatus is capable of forcing the synthesis material both ways through the filters, i.e. down through the filter and in an upward movement through the filter.

The apparatus was partly made and tested in a computer simulation by means of the following materials:
The high-pressure dry inert gas: Inert gas eg. Helium, Argon, Nitrogen.
The top plate of PVDF preferably of, PP, PE, Glasfilled PE, PA, PEEK, POM, PTFE, anodizing aluminium, keronite aluminium or stainless steel materials.
The DC motor with gearbox and encoder from Micro motors E192-2S.24.125,
The tubes (incl air) from Legris 1100Y06 00 or Legris 1100Y04 00.
The drain Tubes Tygoprene AN800017.
The solenoid valves Bürkert Flipper Solenoid Valve 6604.
The lid manifold PVDF preferably of, PP, PE, Glasfilled PE, PA, PEEK, POM, PTFE, anodizing aluminium, keronite aluminium or stainless steel materials.
The carstick cartidges (fitting) Legris 3100 04 00.
The toggle clamp Anodizing aluminium preferably of, PP, PE, Glasfilled PE, PA, PEEK, POM, PTFE, PVDF, keronite aluminium or stainless steel materials.
The Top rim Anodizing aluminium preferably of, PP, PE, Glasfilled PE, PA, PEEK, POM, PTFE, PVDF, keronite aluminium or stainless steel materials.
The Shaft seal MupuSeal 30113-0600-40-S or MupuSeal 30113-0600-40-S.
The ball race POM preferably of, PP, PE, Glasfilled PE, PA, PEEK, PVDF, PTFE, anodizing aluminium, keronite aluminium or stainless steel materials.
The stainless steel ball 6 mm SS ball.
The Locking plate POM preferably of, PP, PE, Glasfilled PE, PA, PEEK, PVDF, PTFE, anodizing aluminium, keronite aluminium or stainless steel materials.
The O-ring Simritz Z1005-004 SZ485 Perfluoroelastomer FFKM preferably of, FPM, or PTFE.
The reaction holder and the belt driven holder POM preferably of, PP, PE, Glasfilled PE, PA, PEEK, PVDF, PTFE, anodizing aluminium, keronite aluminium or stainless steel materials.
The sole plate Anodizing aluminium preferably of, PP, PE, Glasfilled PE, PA, PEEK, POM, PTFE, PVDF, keronite aluminium or stainless steel materials.
The Carstick cartidge (fitting) Legris 3100 04 00.
The Motor drive lid POM preferably of, PP, PE, Glasfilled PE, PA, PEEK, PVDF, PTFE, anodizing aluminium, keronite aluminium or stainless steel materials.
The Motor drive box POM preferably of, PP, PE, Glasfilled PE, PA, PEEK, PVDF, PTFE, anodizing aluminium, keronite aluminium or stainless steel materials.
The drain funnel PVDF preferably of, PP, PE, Glasfilled PE, PA, PEEK, POM, PTFE, anodizing aluminium, keronite aluminium or stainless steel materials.
The shaft seals MupuSeal 30113-0600-40-S or MupuSeal 30412-0200-25-S
The Bearing Iglidur XSM-2023-07. The fitting RS 795-102
The toothed belt RS 474-5381. The toothed pulley POM preferably of, PP, PE, Glasfilled PE, PA, PEEK, PVDF, PTFE, anodizing aluminium, keronite aluminium or stainless steel materials.
The flange coupling Anodizing aluminium preferably of, PP, PE, Glasfilled PE, PA, PEEK, POM, PTFE, PVDF, keronite aluminium or stainless steel materials.
The screw RS 529-933. The stainless steel ball mm SS ball. The optical switch (EE-SX1042) Omron EE-SX1042.
The piston rod Anodizing aluminium preferably of, PP, PE, Glasfilled PE, PA, PEEK, POM, PTFE, PVDF, keronite aluminium or stainless steel materials.
The Cylinder lid Anodizing aluminium preferably of, PP, PE, Glasfilled PE, PA, PEEK, POM, PTFE, PVDF, keronite aluminium or stainless steel materials.
The cylinder tube Anodizing aluminium preferably of, PP, PE, Glasfilled PE, PA, PEEK, POM, PTFE, PVDF, keronite aluminium or stainless steel materials.
The Piston head POM preferably of, PP, PE, Glasfilled PE, PA, PEEK, PVDF, PTFE, PVC, anodizing aluminium, keronite aluminium, brass or stainless steel materials.
The O-ring Simritz Z1005-007 SZ485, 80x3 mm. The foil keyboard Setiket ID835912-836007.
The back bracing Anodising aluminium preferably of, PP, PE, Glasfilled PE, PA, PEEK, POM, PTFE, PVDF, keronite aluminium or stainless steel materials.
The two guide rods Stainless steel materials preferably of, anodising aluminium, or keronite aluminium.
The Sole plate Anodizing aluminium preferably of, PP, PE, Glasfilled PE, PA, PEEK, POM, PTFE, PVDF, keronite aluminium or stainless steel materials.
The bottle manifold PVDF preferably of, PP, PE, Glasfilled PE, PA, PEEK, POM, PTFE, anodizing aluminium, keronite aluminium or stainless steel materials.
The bottle cap PVDF preferably of, PP, PE, Glasfilled PE, PA, PEEK, POM, PTFE, anodizing aluminium, keronite aluminium or stainless steel materials.
The vacuum pump N86KTDC 24 V from KNF.

In the present context, the term "super and sub atmospheric pressure resistant sealing" is contemplated to encompass any sealing function fulfilling the requirement of sealing within a pressure interval ranging from vacuum to a pressure exceeding the atmospheric pressure by a factor of 2 - 5, such as 2 - 4, preferably approximately 2.

## Claims

1. An oligo peptide synthesis apparatus (10) comprising a frame (606) defining a centre line and a horizontal base plane orthogonal to said centre line,
said apparatus (10) comprising a stationary apparatus part (208) being stationary in relation to said frame (606) and a movable apparatus part, said movable apparatus part being movable vertically relatively to said stationary apparatus part (208) along said centre line between a first and a second position,
said stationary apparatus part (208) supporting a first number of material synthesis lines (55) for connection to a respective supply container of a second number of supply containers (70, 80) containing synthesis materials and supporting a third number of solenoid valves (250) for controlling the discharge of said synthesis materials,
said movable apparatus part comprising an oligo peptide synthesis reaction holder (30, 310a, 310b, 310c, 310d) comprising a fourth number of receptors for receiving a corresponding number of vessels, said receptors being located on a first circle having its centre on said centre line,
said movable apparatus part comprising a revolveable holder (409) having a disengageable coupling (420) for connecting said revolveable holder (409) to said oligo peptide synthesis reaction holder (30, 310a, 310b, 310c, 310d),
said movable apparatus part further comprising and supporting a motor drive box sealingly containing a drive motor for revolving said revolveable holder (409),
said movable apparatus part comprising a first super and sub atmospheric pressure resistant sealing means (212a, 212b) for sealing said oligo peptide synthesis reaction holder (30, 310a, 310b, 310c, 310d) relative to said stationary apparatus part (208) and a second super and sub atmospheric pressure resistant sealing means (412a) for sealing said oligo peptide synthesis reaction holder (30, 310a, 310b, 310c, 310d) relative to said revolveable holder (409),
said first and second super and sub atmospheric pressure resistant sealing means establishing when said moveable apparatus part is in said first position a sealed and air tight chamber between said stationary and moveable apparatus parts and containing said oligo peptide synthesis reaction holder (30, 310a, 310b, 310c, 310d), and said revolveable holder (409),
said first and second super and sub atmospheric pressure resistant sealing means allowing when said moveable apparatus part is in said first position said oligo peptide synthesis reaction holder (30, 310a, 310b, 310c, 310d) to be revolved by said revolveable holder (409) within said sealed and air tight chamber, and
said first and second super and sub atmospheric pressure resistant sealing means allowing when said moveable apparatus part is in said second position said oligo peptide synthesis reaction holder (30, 310a, 310b, 310c, 310d) to be removed from said sealed and air tight chamber by disengaging said coupling (420).

2. The oligo peptide synthesis apparatus according to claim 1, each of said synthesis material lines defining a discharge end, said discharge ends being positioned on a second circle having its centre on said centre line for allowing a specific discharge end to be positioned above a specific vessel of said oligo peptide synthesis reaction holder (30, 310a, 310b, 310c, 310d), when said revolveable holder (409), is connected to said oligo peptide synthesis reaction holder (30, 310a, 310b, 310c, 310d).

3. The oligo peptide synthesis apparatus according to claim 1 or 2, said revolveable holder (409) being journalled horizontally relative to said frame (606) for stepwise revolving around said centre line relative to said frame (606), said revolveable holder (409) being powered by said drive motor and being driven by a toothed belt connected to said drive motor through means of a pair of toothed pulleys.

4. The oligo peptide synthesis apparatus according to claim 1, 2 or 3, said coupling comprising a number of carriers (420) provided on said revolveable holder (409), and said carriers (420) being for engagement in a number of carrier holes (320) provided in said oligo peptide reaction holder (30, 310a, 310b, 310c, 310d).

5. The oligo peptide synthesis apparatus according to claim 1, 2 or 3, said coupling comprising a number of carriers provided on said oligo peptide reaction holder (30, 310a, 310b, 310c, 310d), and said carriers for engagement in a number of carrier holes provided in said revolveable holder (409).

6. The oligo peptide synthesis apparatus according to any of the preceding claims, said stationary apparatus part (208) most preferably being made of a POM material, preferably of PP, PE, PEEK, aluminium, anodizing aluminium, glass or stainless steel materials.

7. The oligo peptide synthesis apparatus according to any of the preceding claims, said revolveable holder (409) and said oligo peptide reaction holder (30, 310a, 310b, 310c, 310d) each most preferably being made of a POM material, preferably of PP, PE, glassfilled PE, PEEK, PTFE, aluminium or stainless steel materials.

8. The oligo peptide synthesis apparatus according to any of the preceding claims, said number of receptors is 10-1000, such as 10 - 900, e.g. 100 - 800, preferably 200 - 700, further preferably 200 - 500, 300 - 400, 300 - 350, 350 - 400, 400 - 450 and 450 - 500.

9. The oligo peptide synthesis apparatus according to any of the preceding claims, said vessels comprising a number of wells, a number of columns or combinations thereof.

10. The oligo peptide synthesis apparatus according to any of the preceding claims, each of said vessels having a filter comprising a polystyrene surface or controlled pore glass (CPG).

11. The oligo peptide synthesis apparatus according to any of the preceding claims, said first and second super and sub atmospheric pressure resistant sealing means sealing in pressure interval ranging from vacuum to above atmospheric pressure being from 4 mbar to 20 bar, respectively.

12. A method of performing an oligo peptide synthesis by means of said oligo peptide synthesis apparatus according to claims 1 to 11, said method comprising the steps of:
mounting a reaction holder to a revolveable holder of said oligo peptide synthesis apparatus,
revolving the revolveable holder for finding its initial starting position, if the initial starting position is not known from a former run,
revolving, in a step one, the revolveable holder with the reaction holder to be in position under a specific synthesis material line,
discharging synthesis material to a vessel positioned below in said reaction holder from said specific synthesis material line,
measuring, by means of a colour sensor, a status of a material of at least one filter of a vessel, or optionally statuses of more filters of corresponding vessels, and
optionally, allowing a timer to run for a predetermined time,
optionally, sucking synthesis material from the vessel(s),
determining, on basis of said status(es) of said material(s) of said filter(s) of said vessel(s), whether to discontinue the synthesis in said filter(s) or to continue with the synthesis in said filter(s) i.e. to start from step one again.

13. A method of performing an oligo peptide synthesis by means of said oligo peptide synthesis apparatus according to claims 1 to 11, said sealed and airtight chamber comprising an upper chamber section 260 located above said reaction holder 30 and a lower chamber section 460 located below said reaction holder 30, said method comprising the steps of:
(i) providing a synthesis material to a filter of a vessel of said reaction holder,
(ii) subjecting said upper chamber section 260 to a vacuum while subjecting said lower chamber section 460 to an overpressure or an atmospheric pressure, whereby synthesis material being sucked upwardly through said filter of said vessel, and/or
(iii) subjecting said upper chamber section 260 to an overpressure or an atmospheric pressure while subjecting said lower chamber section 460 to a vacuum whereby synthesis material being pushed or pumped down through said filter of said vessel.
